# EUROPÄISCHE PATENTSCHRIFT

(11) **EP 3 317 128 B1**
(45) Veröffentlichungstag und Bekanntmachung des Hinweises auf die Patenterteilung: **19.06.2019**
(21) Anmeldenummer: 16706887.3
(22) Anmeldetag: 01.03.2016
(51) Int. Cl.: B60C 19/00, B60C 19/12

(54) **FAHRZEUGLUFTREIFEN MIT SCHALLABSORBER**
VEHICLE TIRE WITH NOISER REDUCTION MEANS
PNEUMATIQUE DE VÉHICULE COMPORTANT UN RÉDUCTEUR DE BRUIT

(30) Priorität: 03.07.2015 DE 102015212489
(43) Veröffentlichungstag der Anmeldung: 09.05.2018
(73) Patentinhaber: Continental Reifen Deutschland GmbH, 30165 Hannover (DE)
(72) Erfinder: JACOB, Matthias, 04107 Leipzig (DE); SCHÜRMANN, Oliver, 30855 Langenhagen (DE)
(74) Vertreter: Finger, Karsten
(86) Internationale Anmeldenummer: PCT/EP2016/054263
(87) Internationale Veröffentlichungsnummer: WO 2017/005380

(56) Entgegenhaltungen:
- EP-A1- 1 214 205
- EP-A1- 2 006 125
- WO-A1-2011/051203
- WO-A1-2013/182477

## Beschreibung

Die Erfindung betrifft einen Fahrzeugluftreifen mit einem in seinem Inneren an der dem Laufstreifen gegenüberliegenden Innenfläche haftend angebrachten ringkreisförmig über den Reifenumfang umlaufenden Schallabsorber aus Schaumstoff, wobei der Schallabsorber an einem vorab aufgebrachten, selbsttätig abdichtenden Dichtmittel haftet, welches zumindest unmittelbar nach seinem Aufbringen eine zum Anhaften des Schallabsorbers erforderliche Klebrigkeit aufweist.

Ein derartiger Fahrzeugluftreifen ist aus der DE 10 2007 028932 A1 (Oberbegriff des Anspruchs 1) bekannt. Der Innenabsorber ist ein einstückiger Ring aus offenzelligem Schaumstoff, welcher die Luftschwingung im Reifen reduziert und zu einer Verbesserung des Geräuschverhaltens im Fahrzeug führt. Das an der Reifeninnenseite aufgebrachte hochviskose Dichtmittel hat zwei Funktionen: Es dichtet einen unerwünschten Durchstich des Reifens im Bereich des Laufstreifens ab, indem das viskose Dichtmittel im Falle einer Verletzung der Innenschicht in die Stelle der Verletzung fließt. Zudem dient das Dichtmittel gleichzeitig als "Haftmittel" zum Befestigen des schallabsorbierenden Schaumstoffringes.

Jedoch kann das Fließverhalten des hochviskosen Dichtmittels durch den auf dem Dichtmittel vollflächig aufliegenden Innenabsorber nachteilig beeinflusst sein, so dass die erwünschte Dichtwirkung erst verspätet oder gar nicht eintritt. In Fällen, in denen der eindringende Fremdkörper aus dem Reifen wieder austritt und einen großen Luftkanal hinterlässt, ist eine zuverlässige Abdichtung durch das in seinem Fließverhalten nachteilig beeinflusste Dichtmittel besonders schwierig.

Unter "hochviskos" ist hier ein Dichtmittel, dessen Viskosität mehr als 10 Pa·s beträgt, zu verstehen.

Der Erfindung liegt die Aufgabe zu Grunde, die Abdichtung des Reifens bei Durchstichen und gleichzeitig die Schallabsorption zu verbessern.

Gelöst wird die gestellte Aufgabe erfindungsgemäß dadurch, dass der Schallabsorber aus mehreren ringkreisförmigen, in Umfangsrichtung verlaufenden Teil-Schallabsorberkörpern besteht, welche in axialer Richtung benachbart zueinander angeordnet sind, wobei zwei unmittelbar benachbart angeordnete ringkreisförmige Teil-Schallabsorberkörper in axialer Richtung in einem lichten Abstand beabstandet zueinander angeordnet sind.

Erfindungsgemäß ist der Schallabsorber kein einstückiger ringkreisförmiger, über den Reifenumfang umlaufender Schallabsorber, sondern der Schallabsorber besteht aus mehreren ringkreisförmigen, in Umfangsrichtung verlaufenden Teil-Schallabsorbern. Diese Teil-Schallabsorber sind parallel und beabstandet, also berührungsfrei, zueinander angeordnet. Jeder Teil-Schallabsorberkörper erstreckt sich vorzugsweise über wenigstens 340° des Reifenumfanges, d.h., dass der ringkreisförmige Teil-Schallabsorberkörper ein geschlossener Ringkörper oder ein nicht geschlossener Ringkörper, der zwischen seinen beiden Enden eine Lücke aufweist, sein kann.

Durch die im Vergleich zu einem einzigen schallabsorbierenden Ring vergrößerte Oberfläche durch die mehreren Teil-Schallabsorberkörpern ist die Schallabsorption verbessert. Die mehreren ringkreisförmigen Schallabsorberkörper bedecken durch ihre Beabstandung untereinander nur einen Teil der Dichtmitteloberfläche. Das Dichtmittel weist freie, nicht mit Schallabsorbern überdeckte Oberflächen auf, wodurch das Fließverhalten des Dichtmittels bei Durchstichen und somit die Abdichtung des Reifens verbessert ist.

Es werden so viele Teil-Schallabsorber geeigneter Größe angeordnet, dass das Volumen des aus den Teil-Schallabsorbern bestehenden Schallabsorbers zwischen 1 und 30%, vorzugsweise zwischen 10 und 15% in Bezug auf das Hohlraumvolumen einnimmt, welches durch den Innenraum des auf die Felge aufgezogenen, betriebsbereiten Reifens gebildet wird.

Vorteilhaft ist es, wenn der lichte Abstand zwischen zwei unmittelbar benachbart angeordneten Teil-Schallabsorberkörper 5 mm bis 15 mm, vorzugsweise 8 mm bis 12 mm, besonders bevorzugt etwa 10 mm beträgt, gemessen in axialer Richtung auf Höhe der breitesten Ausdehnung der Teil-Schallabsorberkörper. Dieser Abstand zwischen den Teil-Schallabsorberkörpern erlaubt ein zuverlässiges Fließverhalten des Dichtmittels bei Laufstreifendurchstichen.

Zweckmäßig ist es, wenn der Querschnitt des Teil-Schallabsorberkörpers die Form eines Kreises, eines Halbkreises oder eines regelmäßigen oder unregelmäßigen Polygones wie vorzugsweise eines regelmäßigen Dreieckes oder eines regelmäßigen Viereckes aufweist. Dabei kann entweder eine schmale Seite oder eine breite Seite des Teil-Schallabsorbers auf dem Dichtmittel aufliegen. Liegt die schmale Seite auf, ist das Fließverhalten des Dichtmittels weiter verbessert. Liegt die breite Seite auf, ist der Teil-Schallabsorberkörper umkippsicher auf dem Dichtmittel angeordnet.

Zweckmäßig ist es, wenn die Breite des Teil-Schallabsorberkörpers 5 mm bis 200 mm, vorzugsweise 5 mm bis 100 mm, besonders bevorzugt 10 mm bis 20 mm beträgt, gemessen in axialer Richtung auf Höhe der breitesten Ausdehnung der Teil-Schallabsorberkörpers. Insbesondere im Zusammenspiel mit der Beabstandung der Teil-Schallabsorberkörper voneinander ist ein bestmögliches Fließverhalten des Dichtmittels bei bestmöglicher Schallabsorption erreicht.

Im Rahmen der Erfindung kommen sämtliche Dichtmittel in Frage, die selbsttätig abdichten und zumindest unmittelbar nach dem Aufbringen auf die innere Oberfläche des Reifens soweit klebrig sind, dass der nachträglich aufgebrachte Schallabsorber haftend mit dem Dichtmittel verbunden werden kann. Es eignen sich daher beispielsweise Dichtmittel auf Basis von Polyurethan oder Dichtmittel, welche eines viskose Mischung auf Basis eines Butylkautschukes, eines Polybutens oder auf Basis von Silikon sind.

Vorteilhaft ist es, wenn die Schichtdicke des Dichtmittels zwischen 2 mm und 5 mm, vorzugsweise etwa 3,5 mm beträgt. Durch das verbesserte Fließverhalten des Dichtmittels ist es bei zuverlässiger Abdichtung bei Durchstichen ermöglicht, die Schichtdicke des Dichtmittels um 30% - 50% gegenüber der Schichtdicke des Dichtmittels bei vollflächig aufliegendem Schaumstoffring zu verringern. Hierdurch ist vorteilhaft an Kosten sowie am Reifengewicht gespart.

Weitere Merkmale, Vorteile und Einzelheiten der Erfindung werden nun anhand der Zeichnungen, die neben einem Ausführungsbeispiel des Standes der Technik ein schematisches erfindungsgemäßes Ausführungsbeispiele darstellen, näher beschrieben. Dabei zeigen die:
Fig. 1 einen Querschnitt durch einen Fahrzeugluftreifen des Standes der Technik;
Fig. 2 einen Querschnitt durch einen erfindungsgemäßen Fahrzeugluftreifen.

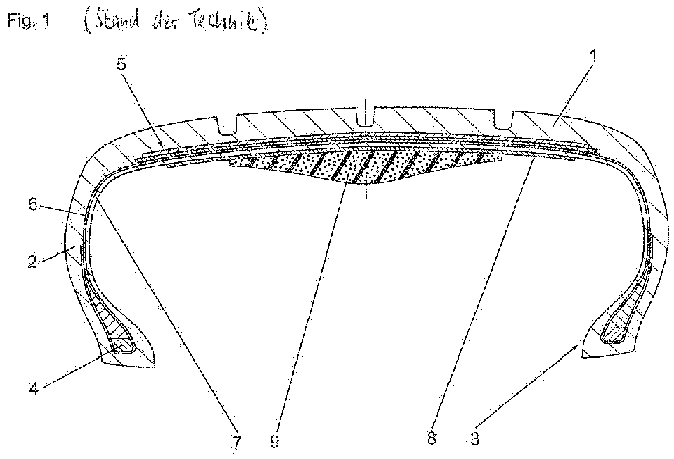

In Fig. 1 ist ein Querschnitt durch einen PKW-Radialreifen dargestellt, welcher einen profilierten Laufstreifen 1, Seitenwände 2, Wulstbereiche 3, Wulstkerne 4 sowie einen mehrlagigen Gürtelverband 5 und eine Karkasseinlage 6 aufweist. An seiner inneren Fläche ist der Reifen mit einer Innenschicht 7 aus einer luftdicht ausgeführten Gummimischung bedeckt. An der dem Laufstreifen 1 gegenüberliegenden inneren Oberfläche der Innenschicht 7 ist ein Dichtmittel 8 aufgebracht, welches in der Lage ist, sich bei Durchstich - Beschädigung des Reifens - selbstabdichtend zu verhalten. Am Dichtmittel 8 haftet vollflächig ein einstückiger ringkreisförmiger Innenabsorber 9 in Funktion eines Schallabsorbers, welcher unmittelbar nach dem Aufbringen des Dichtmittels 8, solange dieses noch ausreichend klebrig ist, auf das Dichtmittel 8 aufgepresst wird. Der Innenabsorber 9 ist bezüglich seiner schallabsorbierenden Eigenschaften auf die Reifenhohlraumfrequenz abgestimmt. Der Innenabsorber 9 weist beispielsweise hier einen etwa langgestreckt dreieckförmigen, bezüglich der radial verlaufenden Symmetrieachse des Reifens einen symmetrischen Querschnitt auf, welcher mit seiner Grundseite vollflächig auf dem Dichtmittel 8 haftet. Der Schaumstoff des Innenabsorber 9 ist ein offenzelliger Schaumstoff, da dieser am besten dazu geeignet ist, Schall zu absorbieren. Als Dichtmittel kommen beispielsweise Polyurethan-Gele oder viskose Mischungen auf Basis von Butylkautschuken, Polybutenen oder Silikon in Frage, wobei die Mischungen die üblichen weiteren Bestandteile, wie Weichmacheröle, enthalten können. Das Dichtmittel wird, beispielsweise durch Aufsprühen, derart eingebracht, dass es zumindest die dem Laufstreifen 1 gegenüberliegende innere Oberfläche bedeckt. Zur optimalen Verteilung des Dichtmittels an der Innenfläche kann der Reifen in Rotation versetzt werden. Das Dichtmittel wird ferner in einer solchen Menge eingebracht, dass die Schichtdicke des Dichtmittels zwischen 7 mm und 8 mm beträgt. Zumindest unmittelbar nach dem Aufbringen soll das Dichtmittel relativ flüssig und klebrig sein. Zu diesem Zeitpunkt wird der vorgefertigte einstückige Innenabsorber 9 in das Innere des Reifens eingebracht. Nach dem Ausreagieren haftet der Innenabsorber 9 an dem elastisch deformierbaren, aber weitestgehend ortsfest verbleibenden Dichtmittel 8.

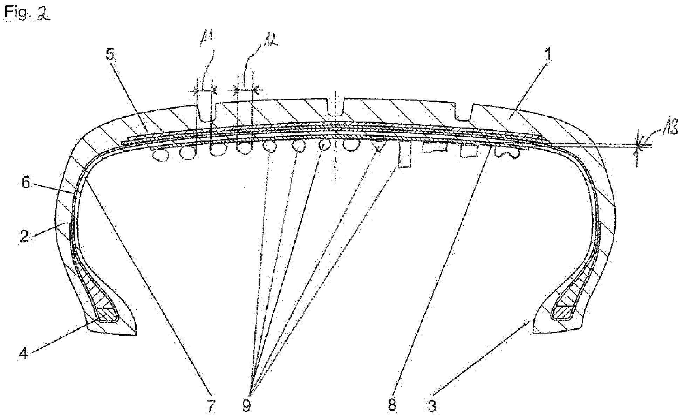

Die Fig. 2 zeigt einen Querschnitt durch einen erfindungsgemäßen Fahrzeugluftreifen. Der Fahrzeugluftreifen der Fig. 2 unterscheidet sich darin von dem Fahrzeugluftreifen der Fig. 1, dass der Schallabsorber 9 aus mehreren ringkreisförmigen, in Umfangsrichtung verlaufenden Teil-Schallabsorberkörpern 10 zusammengesetzt ist. Dabei sind zwei unmittelbar benachbart angeordnete ringkreisförmige Teil-Schallabsorberkörper 10 in axialer Richtung in einem Abstand 11 zueinander angeordnet. In der Fig. 2 zeigt die linke Querschnittshälfte exemplarisch für den gesamten Reifenquerschnitt ringkreisförmige Teil-Schallabsorberkörper 10, welche im Querschnitt eine Kreisform aufweisen. Die ringkreisförmigen Teil-Schallabsorberkörper 10 haften über den Umfang des Reifens betrachtet linienförmig am Dichtmittel 8, so dass eine große freie Dichtmitteloberfläche vorhanden ist. Jeder der Teil-Schallabsorberkörper 10 ist etwa gleich groß und weist eine Breite 12 von 8 mm bis 12 mm, vorzugsweise von 10 mm auf, gemessen in axialer Richtung aR auf Höhe der breitesten Ausdehnung der Teil-Schallabsorberkörper 10. Der axiale Abstand 11 der Teil-Schallabsorberkörper 10 zwischen zwei unmittelbar benachbart angeordnete Teil-Schallabsorberkörper 10 beträgt 8 mm bis 12 mm, bevorzugt etwa 10 mm beträgt, gemessen in axialer Richtung auf Höhe der breitesten Ausdehnung der Teil-Schallabsorberkörper 10. Die Schichtdicke 13 des Dichtmittels 8 ist sehr gering und beträgt etwa 3,5 mm.

Auf der rechten Zeichnungshälfte sind beispielhaft verschiedene mögliche Querschnittsgeometrieen wie Halbkreise und verschiedenste Polygone wie eine Dreieck, ein Rechteck - liegend oder stehend -, ein Quadrat von Teil-Schallabsorberkörper 10 gezeigt, wobei jedoch der Schallabsorber 9 vorzugsweise aus Teil-Schallabsorberkörpern 10 gleicher Geometrie besteht.

### Bezugszeichenliste

- 1: Laufstreifen
- 2: Seitenwand
- 3: Wulstbereich
- 4: Wulstkern
- 5: Gürtelverband
- 6: Karkasseinlage
- 7: Innenschicht
- 8: Dichtmittellage
- 9: Innenabsorber/Schallabsorber
- 10: Teil-Schallabsorberkörper
- 11: Abstand
- 12: Breite eines Teil-Schallabsorberkörpers
- 13: Schichtdicke des Dichtmittels

- aR: axiale Richtung
- rR: radiale Richtung

## Patentansprüche

1. Fahrzeugluftreifen mit einem in seinem Inneren an der dem Laufstreifen (1) gegenüberliegenden Innenfläche haftend angebrachten ringkreisförmig über den Reifenumfang umlaufenden Schallabsorber (9) aus Schaumstoff, wobei der Schallabsorber (9) an einem vorab aufgebrachten, selbsttätig abdichtenden Dichtmittel (8) haftet, welches zumindest unmittelbar nach seinem Aufbringen eine zum Anhaften des Schallabsorbers (9) erforderliche Klebrigkeit aufweist, **dadurch gekennzeichnet, dass** der Schallabsorber (9) aus mehreren ringkreisförmigen, in Umfangsrichtung verlaufenden Teil-Schallabsorberkörpern (10) besteht, welche in axialer Richtung benachbart zueinander angeordnet sind, wobei zwei unmittelbar benachbart angeordnete ringkreisförmige Teil-Schallabsorberkörper (10) in axialer Richtung in einem lichten Abstand (11) beabstandet zueinander angeordnet sind.

2. Fahrzeugluftreifen nach Anspruch 1, **dadurch gekennzeichnet, dass** der lichte Abstand (11) in axialer Richtung zwischen zwei unmittelbar benachbart angeordneten Teil-Schallabsorberkörpern (10) 5 mm bis 200 mm, vorzugsweise 5 mm bis 100 mm, besonders bevorzugt 10 mm bis 20 mm beträgt, gemessen in axialer Richtung (aR) auf Höhe der breitesten Ausdehnung der Teil-Schallabsorberkörper (10).

3. Fahrzeugluftreifen nach Anspruch 1 oder 2, **dadurch gekennzeichnet, dass** der Querschnitt des Teil-Schallabsorberkörpers (10) die Form eines Kreises, eines Halbkreises oder eines regelmäßigen oder unregelmäßigen Polygons wie vorzugsweise eines regelmäßigen Dreieckes oder eines regelmäßigen Viereckes aufweist.

4. Fahrzeugluftreifen nach einem oder mehreren der vorangehenden Ansprüche, **dadurch gekennzeichnet, dass** die Breite (12) des Teil-Schallabsorbers (10) 5 mm bis 15 mm, vorzugsweise 8 mm bis 12 mm, besonders bevorzugt etwa 10 mm beträgt, gemessen in axialer Richtung auf Höhe der breitesten Ausdehnung des Teil-Schallabsorberkörpers (10).

5. Fahrzeugluftreifen nach einem oder mehreren der vorangehenden Ansprüche, **dadurch gekennzeichnet, dass** das Dichtmittel (8) ein Polyurethan-Gel ist.

6. Fahrzeugluftreifen nach einem oder mehreren der Ansprüche 1 bis 3, **dadurch gekennzeichnet, dass** das Dichtmittel (8) eine viskose Mischung auf Basis eines Butylkautschukes, eines Polybutens oder auf Basis von Silikon ist.

7. Fahrzeugluftreifen nach einem oder mehreren der vorangehenden Ansprüche, **dadurch gekennzeichnet, dass** die Schichtdicke (13) des Dichtmittels (8) zwischen 2 mm und 5 mm, vorzugsweise etwa 3,5 mm beträgt.

## Claims

1. Pneumatic vehicle tire comprising a foam sound absorber (9) in its interior, adhesively attached to the inner surface opposite from the tread (1) and extending in an annular manner over the circumference of the tire, the sound absorber (9) adhering to a previously applied, self-sealing sealant (8), which at least immediately after its application has a tackiness required for the adhesive attachment of the sound absorber (9), **characterized in that** the sound absorber (9) consists of a plurality of annular part sound-absorber elements (10) that extend in the circumferential direction and are arranged adjacent to one another in the axial direction, two directly adjacently arranged annular part sound-absorber elements (10) being arranged spaced apart from one another in the axial direction by a clear distance (11) .

2. Pneumatic vehicle tire according to Claim 1, **characterized in that** the clear distance (11) in the axial direction between two directly adjacently arranged part sound-absorber elements (10) is 5 mm to 200 mm, preferably 5 mm to 100 mm, particularly preferably 10 mm to 20 mm, measured in the axial direction (aR) at the level of the widest extent of the part sound-absorber elements (10).

3. Pneumatic vehicle tire according to Claim 1 or 2, **characterized in that** the cross section of the part sound-absorber element (10) has the form of a circle, a semicircle or a regular or irregular polygon, such as preferably a regular triangle or a regular quadrangle.

4. Pneumatic vehicle tire according to one or more of the preceding claims, **characterized in that** the width (12) of the part sound-absorber (10) is 5 mm to 15 mm, preferably 8 mm to 12 mm, particularly preferably approximately 10 mm, measured in the axial direction at the level of the widest extent of the part sound-absorber element (10).

5. Pneumatic vehicle tire according to one or more of the preceding claims, **characterized in that** the sealant (8) is a polyurethane gel.

6. Pneumatic vehicle tire according to one or more of Claims 1 to 3, **characterized in that** the sealant (8) is a viscous mixture based on a butyl rubber, a polybutene or based on silicone.

7. Pneumatic vehicle tire according to one or more of the preceding claims, **characterized in that** the layer thickness (13) of the sealant (8) is between 2 mm and 5 mm, preferably approximately 3.5 mm.

## Revendications

1. Pneumatique de véhicule qui comporte un réducteur de bruit (9) en mousse amené en adhérence dans son intérieur au niveau de la surface intérieure placée à l'opposé de la bande roulement (1) et passant en forme d'anneau de cercle sur toute la circonférence de pneumatique, le réducteur de bruit (9) adhérant au niveau d'un moyen d'étanchéification (8) précédemment appliqué et réalisant automatiquement une étanchéité, ledit moyen présentant un caractère collant au moins directement après son application, ce caractère collant étant nécessaire pour l'adhésion du réducteur de bruit (9), **caractérisé en ce que** le réducteur de bruit (9) se compose de plusieurs corps partiels de réducteur de bruit (10) en forme d'anneau de cercle s'étendant dans la direction périphérique, lesdits corps étant disposés à proximité immédiate dans la direction axiale, deux corps partiels de réducteur de bruit (10) en forme d'anneau de cercle étant disposés de façon espacée à une certaine distance intérieure (11) l'un de l'autre dans la direction axiale.

2. Pneumatique de véhicule selon la revendication 1, **caractérisé en ce que** la distance intérieure (11) dans la direction axiale entre deux corps partiels de réducteur de bruit (10) disposés à proximité immédiate est de 5 mm à 200 mm, de préférence de 5 mm à 100 mm, de façon particulièrement préférée de 10 mm à 20 mm, mesurée dans la direction axiale (aR) à la hauteur de la plus large extension des corps partiels de réducteur de bruit (10).

3. Pneumatique de véhicule selon la revendication 1 ou 2, **caractérisé en ce que** la section transversale du corps partiel de réducteur de bruit (10) présente la forme d'un cercle, d'un demi-cercle ou d'un polygone régulier ou irrégulier comme de préférence un triangle régulier ou un quadrilatère régulier.

4. Pneumatique de véhicule selon l'une quelconque des revendications précédentes ou plusieurs d'entre elles, **caractérisé en ce que** la largeur (12) du réducteur de bruit partiel (10) est de 5 mm à 15 mm, de préférence de 8 mm à 12 mm, de façon particulièrement préférée approximativement de 10 mm, mesurée dans la direction axiale à la hauteur de la plus large extension mesurée dans la direction axiale du corps partiel de réducteur de bruit (10).

5. Pneumatique de véhicule selon l'une quelconque des revendications précédentes ou plusieurs d'entre elles, **caractérisé en ce que** le moyen d'étanchéification (8) est un gel de polyuréthane.

6. Pneumatique de véhicule selon l'une quelque des revendications 1 à 3 ou plusieurs d'entre elles, **caractérisé en ce que** le moyen d'étanchéification (8) est un mélange visqueux à base d'un caoutchouc de butyle, d'un polybutène ou à base de silicone.

7. Pneumatique de véhicule selon l'une quelconque des revendications précédentes ou plusieurs d'entre elles, **caractérisé en ce que** l'épaisseur de couche (13) du moyen d'étanchéification (8) est comprise entre 2 mm et 5 mm et est de préférence d'approximativement 3,5 mm.
